# NEUE EUROPÄISCHE PATENTSCHRIFT

(11) **EP 0 552 688 B2**
(45) Veröffentlichungstag und Bekanntmachung des Hinweises auf die Entscheidung über den Einspruch: **18.09.2002**
(45) Hinweis auf die Patenterteilung: 05.06.1996
(21) Anmeldenummer: 93100609.2
(22) Anmeldetag: 16.01.1993
(51) Int. Cl.: B25J 9/00, B25J 9/04, B25J 9/10, B25J 19/00

(54) **Mehrachsiger Roboter**
Multi-axis robot
Robot à plusieurs axes

(30) Priorität: 20.01.1992 DE 9200618 U
(43) Veröffentlichungstag der Anmeldung: 28.07.1993
(73) Patentinhaber: KUKA Roboter GmbH, 86165 Augsburg (DE)
(72) Erfinder: Zimmer, Ernst, W-8904 Friedberg (DE)
(74) Vertreter: Lichti, Heiner, Dipl.-Ing.

(56) Entgegenhaltungen:
- EP-A- 0 194 217
- EP-A- 0 217 336
- EP-A- 0 241 556
- EP-A- 0 269 749
- EP-A- 0 435 285
- DE-A- 3 634 048
- FR-A- 2 186 331
- FR-A- 2 506 088
- GB-A- 2 151 206
- US-A- 4 468 070
- US-A- 4 693 663

## Beschreibung

Die Erfindung betrifft einen mehrachsigen Roboter nach dem Oberbegriff des Anspruchs 1.

Ein Roboter (DE-OS 40 01 885) besitzt ein Gestell und ein Karussell, das um die Grundachse drehbar auf dem Gestell angeordnet und mit einem Antrieb versehen ist. Bei den bekannten Konstruktionen sitzt der Antriebsmotor für das Karussell im Gestell unterhalb der Karussell-Grundplatte. Das Drehlager besitzt eine große Stützbreite und ist getrennt vom Getriebe angeordnet. Das Gestell weist ein zugleich die Verkleidung bildendes massives Stützrohr auf, das den Karussell-Antneb und den Kabelschlepp umgibt und an dem auch das Drehlager befestigt ist.

Darüberhinaus ist ein Roboter gemäß oberbegriff von Anspruch 1 zum Beispiel aus EP-A-0435 285 bekannt.

Es ist Aufgabe der vorliegenden Erfindung, einen mehrachsigen Roboter aufzuzeigen, der eine kompakte Konstruktion im Gestell- und Karusselbereich in Verbindung mit einer freien Zugänglichkeit der Bauteile besitzt.

Die Erfindung löst diese Aufgabe mit den Merkmalen im Hauptanspruch.
Der erfindungsgemäße Roboter hat einen Großteil der Antriebsteile für das Karussell in Höhe oder oberhalb der Karussell-Grundplatte angeordnet, die dadurch für Montage- und Servicezwecke frei und gut zugänglich liegen. Für den obenliegenden Motor ergibt sich auch eine bessere Kühlung.

Die zentrale Stützsäule des Gestells ist zugleich Momenten- und Lagerstütze für das Karussell. Das Drehlager hat dabei eine geringere Stützbreite als beim Stand der Technik und ist vorzugsweise an der Kopfplatte der Stützsaule angeordnet. Die Kopfplatte trägt zugleich auch das Stützteil des Getriebes. Das Gestell wird hierdurch schlanker und bleibt trotzdem kompakt und niedrig.

Der erfindungsgemäße Roboter läßt sich kostengünstiger herstellen und ist leichter zu handhaben. Die Gestell- und Karussell-Konstruktionen sind hierdurch auch wirtschaftlicher als bei vorbekannten Bauarten.

Das Getriebe ist als hochuntersetzendes Zycloidengetriebe oder als Planetengetriebe ausgebildet. Das Getriebe ist zentral zur Grundachse aufgebaut und angeordnet. Dies trägt zur kompakten Gestaltung bei.

Das Getriebe kann mit einer zusätzlichen Getriebevorstufe versehen sein, wobei der Motor seitlich versetzt neben der Grundachse sitzen kann. Der Motor kann aber auch zentral zur Grundachse angeordnet und auf das Getriebe aufgesteckt sein. Dies vereinfacht und verbilligt die Konstruktion.

Im Sinne einer kompakten Bauweise ist das Drehlager in das Getriebe integriert. Von Getriebe und Drehlager sind dann die jeweils relativ ortsfesten Teile auf der Stützsäule angeordnet und befinden sich knapp unterhalb der Karussell-Grundplatte.

Die Stützsäule ist außenseitig vom Kabelschlepp umgeben, wobei um diesen herum eine abnehmbare Verkleidung angeordnet ist, die je nach Arbeitsumfeld auch weggelassen werden kann. Der Kabelschlepp und die sonstigen Installationsteile sind dadurch frei und ungehindert zugänglich, ohne daß das Gestell größer werden muß.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Fig. 1:: in Seitenansicht und Übersichtdarstellung einen mehrachsigen Roboter,
- Fig. 2:: eine vergrößerte und geschnittene Darstellung des Gestells mit neben der Grundachse sitzendem Antriebsmotor; und
- Fig. 3:: eine Variante zu Fig. 2 mit einem mittig auf der Grundachse sitzenden Antriebsmotor

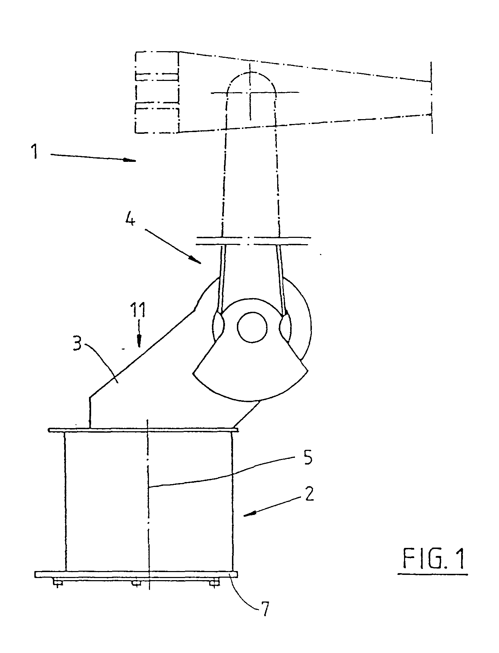

Fig. 1 zeigt in der Übersicht einen mehrachsigen Roboter (1) mit einem Gestell (2) und einem darauf um die Grundachse (5) drehbar angeordneten Karussell (3). Das Karussell (3) besitzt einen Aufbau (4), der in der gezeigten Ausführungsform aus einer Schwinge, einem Ausleger und einer Roboterhand besteht. Der Aufbau (4) kann aber auch anders gestaltet sein. Das Gestell (2) befindet sich in der gezeigten Ausführungsform am Boden und ist dort befestigt. Es kann aber auch ortsfest an einer Wand oder relativ beweglich angeordnet sein, z.B. in einem Portal oder auf einer Schwinge. Die Zahl und Ausbildung dieser Zusatzachsen ist beliebig.

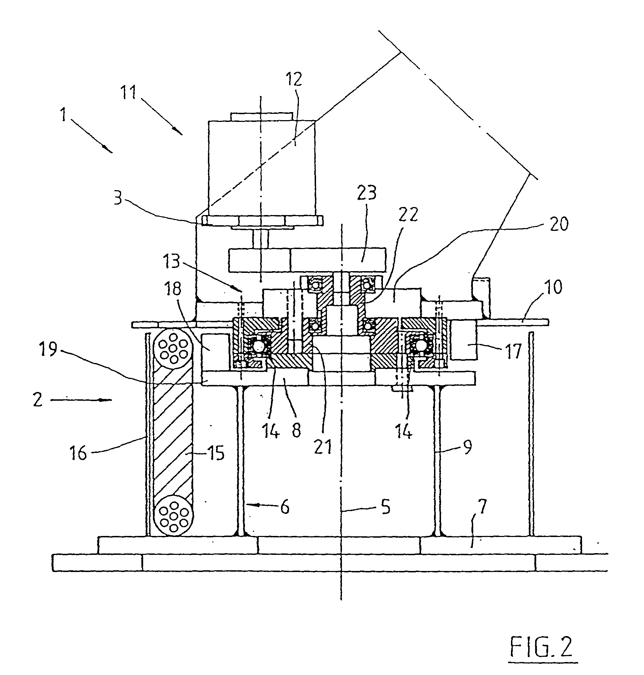

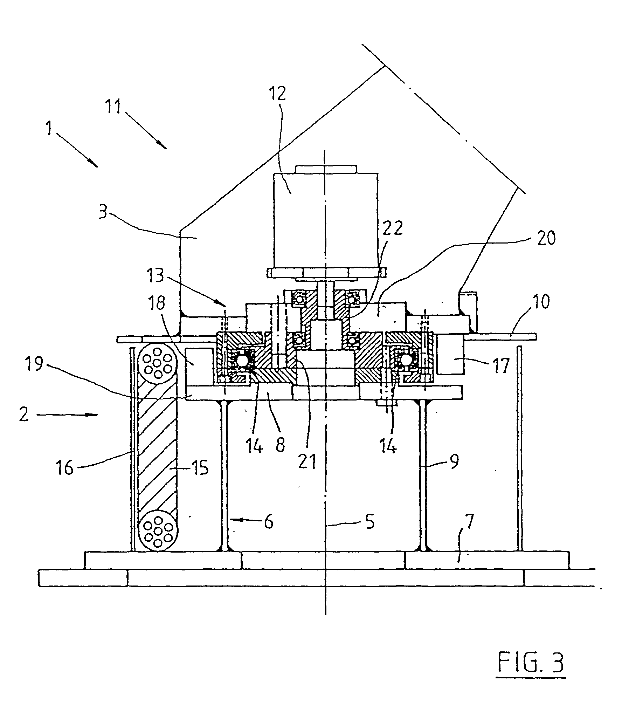

Fig. 2 und 3 verdeutlichen den Aufbau des Gestells (2) und des Karussells (3) im einzelnen anhand eines Querschnitts.

Das Gestell (2) besteht aus einer zentral zur vertikalen Grundachse (5) angeordneten Stützsäule (6), die außenseitig vom Kabelschlepp (15) und sonstigen Installations- und Versorgungsteilen umgeben ist. Letztere stellen eine Verbindung zwischen der gestellfesten Einspeisung und dem drehbaren Karussell (3) beziehungsweise Aufbau (4), sowie den daran angeordneten Verbrauchern her.

Die Stützsäule (6) besteht aus einem rohrförmigen Körper (9), der aufrecht auf einer scheibenförmigen Bodenplatte (7) steht und oben eine ebenfalls scheibenförmige Kopfplatte (8) trägt. Beide Platten (7,8) besitzen in der Mitte Durchgangsöffnungen. Die Stützsäule (6) ist als Schweißkonstruktion ausgebildet.

Das Karussell (3) besitzt eine Karussell-Grundplatte (10), auf der der Aufbau (4) angeordnet ist. Für die Karussell-Bewegungen ist ein Antrieb (11) vorgesenen, dessen Teile sich im wesentlichen in Höhe und uber der Karussell-Grundplatte (10) befinden. Der Antrieb stützt sich an der knapp unter der Karussell-Grundplatte (10) endenden Stützsäule ab. Das Karussell (3) ist über ein Drehlager (14) auf der Stützsaule (6) gelagert. Die Stützsaule (6) bildet eine kombinierte Momenten- und Lagerstütze für das Karussell (3).

Der Antrieb (11) besteht aus einem Motor (12), vorzugsweise einem schnellaufenden Elektromotor und einem Getriebe (13). Im Ausführungsbeispiel der Fig. 2 ist zwischen Motor (12) und Getriebe (13) zusätzlich noch eine Getriebevorstufe (23) angeordnet.

Das Getriebe (13) ist als hochuntersetzendes Getriebe ausgebildet. Im gezeigten Ausführungsbeispiel handelt es sich um ein Zycloidengetriebe. Es kann alternativ aber auch ein Planetengetriebe oder ein anderes geeignetes hochuntersetzendes Getriebe sein. Das Getriebe (13) ist zentral zur vertikalen Grundachse (5) ausgebildet und angeordnet.

Das Getriebe (13) besteht aus einem mit dem Motor (12) verbundenen Antriebsteil (22), einem mit dem Karussell (3) in Verbindung stehenden Abtriebsteil (20) und einem an der Kopfplatte (8) der Stützsäule (6) befestigten Stützteil (21).

Im Ausführungsbeispiel der Fig. 3 sitzt der Motor (12) in einer geeigneten Halterung und steht in direkter Verbindung mit dem Antriebsteil (22).

Das Abtriebsteil (20) ist am Karussell (3) befestigt und dabei etwa in Höhe oder oberhalb der Karussell-Grundplatte (10) angeordnet. Auch der Motor (12) ist oberhalb der Karussell-Grundplatte (10) angeordnet.

Im Ausführungsbeispiel von Fig. 2 und 3 ist das Drehlager (14) des Karussells (3) in das Getriebe (13) integriert. Dabei ist das Drehlager (14) im Randbereich des Getriebes (13) zwischen Stützteil (21) und Abtriebsteil (20) angeordnet.

In der gezeigten Ausführungsform bilden Drehlager (14) und Getriebe (13) eine kompakte und niedrigbauende Einheit, die sich zum Teil in Höhe oder auf der Karussell-Grundplatte (10) befindet. Soweit Teile davon unterhalb der Karussell-Grundplatte (10) angeordnet sind, befinden sie sich in dem relativ niedrigen Zwischenraum zwischen Kopfplatte (8) und Karussell-Grundplatte (10).

Am Karussell (3) sowie an der Kopfplatte (8) der Stützsäule (6) sind Anschläge (17,18) vorgesehen, die im Zusammenspiel den Drehwinkel des Karussells (3) begrenzen. Das Getriebe (13) und das Drehlager (14) sind dabei zentral zur Kopfplatte (8) der Stützsäule (6) angeordnet. Die ebenfalls kreisförmige Kopfplatte (8) hat demgegenüber einen etwas größeren Durchmesser, wodurch außen um Getriebe (13) und Drehlager (14) ein Ringflansch (19) gebildet wird. Auf diesem ist der Anschlag (18) angeordnet. Der Anschlag (18) kann über mehrere vorbereitete Aufnahmen zur Einstellung unterschiedlicher Winkel auf der Kopfplatte (8) verstellt werden. Es ist auch die Anordnung mehrerer Anschläge (18) möglich. Der relativ dazu bewegliche Gegenanschlag (17) befindet sich an der Unterseite der Karussell Grundplatte (10). Beide Anschlage (17,18) umgeben auf ihrer Bewegungsbahn das Getriebe (13) und das Drehlager (14) mit knappem Abstand.

Wie Fig. 2 und 3 verdeutlichen, wird die Höhe des Gestells (2) durch den Kabelschlepp (15) bestimmt. Er ist höher als die Stützsäule (6) und reicht über dessen Kopfplatte (8) und außen um das Drehlager (14) beziehungsweise Teile des Getriebes (13) herum. Außen um den Kabelschlepp (15) kann eine abnehmbare Verkleidung (16) angeordnet sein.

### STÜCKLISTE

- 1: Roboter
- 2: Gestell
- 3: Karussell
- 4: Aufbau Karussell
- 5: Grundachse
- 6: Stützsäule
- 7: Bodenplatte
- 8: Kopfplatte
- 9: Rohr
- 10: Karussell-Grundplatte
- 11: Antrieb Karussell
- 12: Motor
- 13: Getriebe
- 14: Drehlager
- 15: Versorgung, Kabelschlepp
- 16: Verkleidung
- 17: Anschlag
- 18: Gegenanschlag
- 19: Ringflansch
- 20: Getriebeteil, Abtriebsteil
- 21: Getriebeteil, Stützteil
- 22: Getriebeteil, Antriebsteil
- 23: Getriebevorstufe

## Patentansprüche

1. Mehrachsiger Roboter mit einem Gestell (2) und einem darauf um eine Grundachse (5) drehbar angeordneten und angetriebenen Karussell (3), wobei das Gestell (2) eine zentrale Stützsäule (6) mit einer Kopfplatte (8) aufweist, wobei Stützsäule (6) die als kombinierte Momenten- und Lagerstütze ausgebildet ist, und wobei der Antrieb (11) für das Karussell (3) im wesentlichen in Höhe oder oberhalb der Karussell-Grundplatte (10) angeordnet ist, **dadurch gekennzeichnet, daß** die Stützsäule (6) außenseitig von einem Kabelschlepp (15) umgeben ist, daß das Kabelschlepp von einer abnehmbaren Verkleidung umgeben ist, daß das Getriebe (13) als hochuntersetzendes Zykloiden- oder Planetengetriebe ausgebildet ist, daß das Getriebe (13) auf der Kopfplatte (8) angeordnet ist und daß das Drehlager in das Getriebe (13) im vertikalen Bereich zwischen der Kopfplatte (8) der Stützsaüle (6) und einem Abtriebsteil (20) des Getriebes (13) integriert ist.

2. Mehrachsiger Roboter nach Anspruch 1, **dadurch gekennzeichnet, daß** das Drehlager (14) des Karussells (3) und das Stützteil (21) des Getriebes (13) an der Kopfplatte (8) der Stützsäule (6) angeordnet sind.

3. Mehrachsiger Roboter nach Anspruch 1 oder 2, **dadurch gekennzeichnet, daß** der Motor (12) auf dem Karussell (3) sitzt und das Abtriebsteil (20) des Getriebes (13) auf Höhe oder über der Karussell-Grundplatte (10) angeordnet ist.

4. Mehrachsiger Roboter nach Anspruch 1 oder einem der folgenden, **dadurch gekennzeichnet, daß** der Motor (12) zentral zur Grundachse (5) angeordnet und auf das Getriebe (13) aufgesteckt ist.

5. Mehrachsiger Roboter nach Anspruch 1 oder einem der folgenden, **dadurch gekennzeichnet, daß** das Getriebe (13) und das Drehlager (14) zentral zur Kopfplatte (8) der Stützsäule (6) angeordnet sind, wobei an der Kopfplatte (8) ein außenseitiger Ringflansch (19) freibleibt, an dem ein oder mehrere Anschläge (18) für die Begrenzung des Karussell-Drehwinkels befestigbar sind.

6. Mehrachsiger Roboter nach Anspruch 5, **dadurch gekennzeichnet, daß** am Karussell (3) ein mit dem Anschlag (18) zusammenwirkender Gegenanschlag (17) angeordnet ist.

7. Mehrachsiger Roboter nach Anspruch 5 oder 6, **dadurch gekennzeichnet, daß** der Anschlag (18) verstellbar ist.

8. Mehrachsiger Roboter nach Anspruch 1 oder einem der folgenden, **dadurch gekennzeichnet, daß** die Stützsäule (6) niedriger als der Kabelschlepp (15) ist.

## Claims

1. A multi-axis robot having a frame (2) and a carousel element (3) which is arranged and driven rotatably thereon about the base axis (5), the frame (2) having a central supporting column (6) comprising a top plate (8), the supporting column (6) being constructed as a combined moment and bearing support for the carousel element (3), and the drive (11) for the carousel element (3) being arranged substantially at the level of or above the carousel element base plate (10), **characterized in that** the supporting column (6) is surrounded externally by a cable pull (15), the cable pull (15) is surrounded by a removable cladding (16), the gear (13) is constructed as a highly reducing cycloid gear or planetary gear, the gear (13) is arranged on the top plate (8), and the pivot bearing (14) is integrated in the gear (13) in the vertical region between the top plate (8) of the supporting column (6) and an output portion (20) of the gear (13).

2. A multi-axis robot according to claim 1, **characterized in that** the pivot bearing (14) of the carousel element (3) and the supporting part (21) of the gear (13) are arranged on the top plate (8) of the supporting column (6).

3. A multi-axis robot according to claim 1 or 2, **characterized in that** the motor (12) is seated on the carousel element (3) and the output portion (20) of the gear (13) is arranged at the level of or above the carousel element base plate (10).

4. A multi-axis robot according to claim 1 or one of the subsequent claims, **characterized in that** the motor (12) is arranged centrally with respect to the base axis (5) and is pushed onto the gear (13).

5. A multi-axis robot according to claim 1 or one of the subsequent claims, **characterized in that** the gear (13) and the pivot bearing (14) are arranged centrally with respect to the top plate (8) of the supporting column (6), an external annular flange (19) on the top plate (8) remaining fee, and it being possible to secure to the annular flange (19) one or more stops (18) to limit the angle of rotation of the carousel element.

6. A multi-axis robot according to claim 5, **characterized in that** a counter-stop (17) cooperating with the stop (18) is arranged on the carousel element (3).

7. A multi-axis robot according to claim 5 or 6, **characterized in that** the stop (18) is adjustable.

8. A multi-axis robot according to claim 1 or one of the subsequent claims, **characterized in that** the supporting column (6) is lower than the cable pull (15).

## Revendications

1. Robot à plusieurs axes, comportant un bâti (2) et un bras (3), monté sur celui-ci et entraîné de manière à tourner autour de l'axe de base (5), le bâti (2) présentant une colonne d'appui centrale (6) avec une plaque de recouvrement (8), la colonne d'appui (6) étant réalisée en tant qu'appui combiné pour les couples et le palier pour le bras (3), tandis que le dispositif d'entraînement (11) du bras (3) est disposé sensiblement au niveau ou au-dessus de la plaque de base (10) du bras, **caractérisé en ce que** la colonne d'appui (6) est entourée, du côté extérieur, d'un ensemble de câbles (15), **en ce qu'**il est prévu, à l'extérieur autour de l'ensemble de câbles (15), un habillage (16) amovible, **en ce que** la transmission (13) est réalisée sous la forme d'un engrenage cycloïdal à forte démultiplication ou sous celle d'un engrenage planétaire, **en ce que** la transmission (13) est placée sur la plaque de recouvrement (8) et **en ce que** le palier de pivotement (14) est intégré dans la transmission (13) dans la partie verticale entre la plaque de recouvrement (8) de la colonne d'appui (6) et un élément de sortie (20) de la transmission (13).

2. Robot à plusieurs axes selon la revendication 1, **caractérisé en ce que** le palier de pivotement (14) du bras (3) et l'élément d'appui (21) de la transmission (13) sont disposés contre la plaque de recouvrement (8) de la colonne d'appui (6).

3. Robot à plusieurs axes selon la revendication 1 ou 2, **caractérisé en ce que** le moteur (12) est placé sur le bras (3) et que l'élément de sortie (20) de la transmission (13) est disposé au niveau ou au-dessus de la plaque de base (10) du bras.

4. Robot à plusieurs axes selon la revendication 1 ou l'une des suivantes, **caractérisé en ce que** le moteur (12) est placé de façon centrale par rapport à l'axe de base (5) et enfilé sur la transmission (13).

5. Robot à plusieurs axes selon la revendication 1 ou l'une des suivantes, **caractérisé en ce que** la transmission (13) et le palier de pivotement (14) sont disposés de façon centrale par rapport à la plaque de recouvrement (8) de la colonne d'appui (6), tandis que reste libre, du côté extérieur de la plaque de recouvrement (8), un rebord annulaire (19) sur lequel peuvent être fixées une ou plusieurs butées (18) pour limiter l'angle de rotation du bras.

6. Robot à plusieurs axes selon la revendication 5, **caractérisé en ce qu'**il est prévu, sur le bras (3), une contre-butée (17) qui coopère avec la butée (18).

7. Robot à plusieurs axes selon la revendication 5 ou 6, **caractérisé en ce que** la butée (18) peut être déplacée.

8. Robot à plusieurs axes selon la revendication 1 ou l'une des suivantes, **caractérisé en ce que** la colonne d'appui (6) est plus basse que l'ensemble de câbles (15).
